# EUROPÄISCHE PATENTSCHRIFT

(11) **EP 4 057 413 B1**
(45) Veröffentlichungstag und Bekanntmachung des Hinweises auf die Patenterteilung: **22.11.2023**
(21) Anmeldenummer: 22159717.2
(22) Anmeldetag: 02.03.2022
(51) Int. Cl.: H01M 10/0525, H01M 10/0567, H01M 10/42, H01M 50/124, H01M 50/451, H01M 50/531, H01M 50/682

(54) **ENERGIESPEICHER UND KRAFTFAHRZEUG**
ENERGY STORAGE SYSTEM AND MOTOR VEHICLE
ACCUMULATEUR D'ÉNERGIE ET VÉHICULE AUTOMOBILE

(30) Priorität: 12.03.2021 DE 102021202426
(43) Veröffentlichungstag der Anmeldung: 14.09.2022
(73) Patentinhaber: VOLKSWAGEN AG, 38440 Wolfsburg (DE)
(72) Erfinder: KOCH, Stephan Leonhard, 38239 Salzgitter (DE); KUNZE, Miriam, 30926 Seelze (DE)
(74) Vertreter: FDST Patentanwälte

(56) Entgegenhaltungen:
- US-B1- 8 309 240
- ZHANG JINSHUI ET AL: "Superior Conductive Solid-like Electrolytes: Nanoconfining Liquids within the Hollow Structures", NANO LETTERS, Bd. 15, Nr. 5, 6. April 2015 (2015-04-06), Seiten 3398-3402, XP55963844, US ISSN: 1530-6984, DOI: 10.1021/acs.nanolett.5b00739
- CEVIK EMRE ET AL: "Sulfonated Hollow Silica Spheres as Electrolyte Store/Release Agents: High-Performance Supercapacitor Applications", ENERGY TECHNOLOGY, Bd. 7, Nr. 10, 16. Juli 2019 (2019-07-16), Seite 1900511, XP55963849, DE ISSN: 2194-4288, DOI: 10.1002/ente.201900511 Gefunden im Internet: URL:https://onlinelibrary.wiley.com/doi/fu ll-xml/10.1002/ente.201900511>

## Beschreibung

Die Erfindung betrifft einen Energiespeicher, insbesondere einen Energiespeicher für ein Kraftfahrzeug. Außerdem betrifft die Erfindung ein Kraftfahrzeug mit einem solchen Energiespeicher.

Energiespeicher für Kraftfahrzeuge, insbesondere für elektromotorisch betriebene (darunter fallen auch als Plug-in-Hybrid ausgestaltete) Kraftfahrzeuge, umfassen üblicherweise wenigstens eine, meist aber eine Vielzahl von (insbesondere elektrochemischen) Sekundärzellen, d. h. wieder aufladbare Batteriezellen. Diese sind meist zu mehreren in einem Batteriemodul und mehrere Batteriemodule zu einer Traktionsbatterie zur Steigerung der abrufbaren Leistung zusammengefasst. Insbesondere kommen dabei Lithium-basierte Sekundärzellen, insbesondere Lithium-Ionen-Zellen ("Li-Ionen-Zellen") zum Einsatz.

Die Sekundärzellen sind jedoch - insbesondere aufgrund von Nebenreaktionen - Alterungsprozessen unterworfen, die unter anderem zu "Verlust" von Li-Ionen führen können. Da Li-Ionen bei der elektrochemischen Reaktion die Ladungsträger innerhalb der Sekundärzelle bilden, führt ein solcher Verlust erkanntermaßen zu einem verringerten Ladungstransport, was wiederum zu einer - regelmäßig unerwünschten - Verringerung der elektrischen Kapazität und/oder Leistungsfähigkeit der Sekundärzelle führt.

US 8,309,240 B1 beschreibt eine Batterie, z. B. eine Lithium-Ionen-Batterie, die ein eingekapseltes feuerhemmendes Material enthält. In einigen Ausführungsformen werden stabile Polymerkugeln verwendet, um ein wirksames feuerhemmendes Material einzukapseln. Unter normalen Betriebsbedingungen kommt das feuerhemmende Material nicht mit dem Elektrolyten, der Kathode oder der Anode in Berührung, wodurch die Leistungsminderung minimiert wird, die auftritt, wenn feuerhemmende Materialien direkt mit dem Elektrolyten in Berührung kommen. Bei einer thermischen Kettenreaktion oder überhöhten Temperaturen verdampft das feuerhemmende Material durch die geschmolzene Verkapselungsphase und setzt dabei feuerhemmendes Material frei, um die Entflammbarkeit der Batterie zu minimieren oder zu verhindern.

Zhang Jinshui et al: "Superior Conductive Solid-like Electrolytes: Nanoconfining Liquids within the Hollow Structures", Nano Letters, Bd. 15, Nr. 5, 6. April 2015, Seiten:3398-3402, XP055963844, American Chemical Society, US, ISSN 1530-6984, DOI: 10.1021/acs.nanolett.5b00739 beschreibt die Nutzung von Hohlkugeln aus porösem Siliziumdioxid zur Aufnahme eines flüssigen Elektrolyten, um eine näherungsweise feste Elektrolytschicht zu generieren.

Cevik Emre et al: "Sulfonated Hollow Silica Spheres as Electrolyte Store/Release Agents: High-Performance Supercapacitor Applications", Bd.:7, Nr.: 10, 26. Juli 2019, Seiten: 1900511, XP055963849, Wiley - V C H Verlag GmbH & Co. KGaA, DE, ISSN 2194-4288, DOI: 10.1002/ente.201900511 beschreibt die Nutzung von sulfonierten Hohlkugeln aus Siliziumdioxid in Superkondensatoren als säurespeichernde und säurefreisetzende Mittel in einer Polymermatrix. Durch deren Architektur können die Hohlkugeln mit Säure gefüllt und in Poly(vinylalkohol) mit verschiedenen Gewichtsanteilen dispergiert werden, um Nanokomposit-Gelpolymerelektrolyte herzustellen.

Der Erfindung liegt die Aufgabe zugrunde, eine verzögerte Alterung eines Energiespeichers zu ermöglichen.

Diese Aufgabe wird erfindungsgemäß gelöst durch einen Energiespeicher mit den Merkmalen des Anspruchs 1. Außerdem wird diese Aufgabe erfindungsgemäß gelöst durch ein Kraftfahrzeug mit den Merkmalen des Anspruchs 9. Vorteilhafte und teils für sich erfinderische Ausführungsformen und Weiterentwicklungen der Erfindung sind in den Unteransprüchen und der nachfolgenden Beschreibung dargelegt.

Der erfindungsgemäße Energiespeicher dient vorzugsweise zum Einsatz in oder mit einem Kraftfahrzeug, insbesondere einem landgestützten, radgebunden Kraftfahrzeug. Der Energiespeicher weist dabei (insbesondere wenigstens) eine Sekundärzelle mit (zumindest wenigstens) zwei zueinander komplementären Elektroden (insbesondere also eine Anode und eine Kathode), mit einem diese Elektroden beabstandenden (d. h. insbesondere voneinander räumlich trennenden) Separator und mit einem Zellgehäuse auf, das die Elektroden und den Separator umhüllt. Außerdem weist der Energiespeicher einen Elektrolyten auf, der vorzugsweise ebenfalls Teil der Sekundärzelle ist, und mit dem das Zellgehäuse befüllt ist. Außerdem weist die Sekundärzelle Glashohlkugeln auf, die sich innerhalb des Zellgehäuses befinden, die mit einer Menge des Elektrolyten und/oder eines Additivs befüllt sind, und die - insbesondere mit deren Außenfläche - mit dem im Zellgehäuse aufgenommenen Elektrolyten in Kontakt stehen.

Bei dem Elektrolyten handelt es sich vorzugsweise um eine Flüssigkeit, auch als Elektrolytlösung oder Flüssigelektrolyt bezeichnet.

Das Zellgehäuse ist optional durch eine vergleichsweise steifes Metallblech oder durch ein Folienlaminat gebildet. Letzteres ist insbesondere für den Fall, wenn die Sekundärzelle eine sogenannte "Pouchzelle" bildet.

Bei dem Additiv handelt es sich vorzugsweise um ein Additiv für den Elektrolyten, das bspw. dazu dient, dessen Temperaturbeständigkeit zu erhöhen und/oder Alterungsprozesse zu hemmen oder dergleichen.

Die Glaskugeln bilden vorzugsweise ein Reservoir für eine zusätzliche Menge des Elektrolyten bzw. des Additivs (optional auch für mehrere Additive), das eine im Betrieb der Sekundärzelle zeitverzögerte Bereitstellung des entsprechenden Inhalts ermöglicht. Diese zeitverzögerte Bereitstellung erfolgt dabei vorzugsweise durch eine Schädigung einer (Außen-) Wandung der Glaskugeln und einem damit bedingten Austritt des Inhalts (also des Elektrolyten bzw. Additivs) in den "freien" Elektrolyten des Sekundärzelle. Dadurch kann beispielsweise ein bereits gealterter Elektrolyt "erfrischt" oder "erneuert" werden, indem zusätzliche Lithium-Ionen zugeführt werden. Die Lebensdauer der Sekundärzelle kann somit verlängert und/oder deren Alterung verzögert werden.

In einer bevorzugten Ausführung ist die Wandung der Glashohlkugeln ausschließlich durch ein Glas gebildet.

Des Weiteren ist das Glas der Glashohlkugeln derart gewählt, dass dieses durch eine chemische Reaktion mit dem Elektrolyten, optional vollständig, gelöst wird. Dies hat den Vorteil, dass eine solche chemische Reaktion grundsätzlich unabhängig vom Betriebszustand der Sekundärzelle und/oder deren Auslastung ablaufen kann und somit der Zeitpunkt der Freisetzung des Inhalts der jeweiligen Glashohlkugel vergleichsweise einfach vorauszubestimmen ist. Außerdem wird die Auflösung des Glases häufig durch Nebenprodukte, die im Betrieb der Sekundärzelle gebildet werden und (insbesondere neben dem Verbrauch von Li-Ionen) ebenfalls zur Zellalterung, zumindest zur Reduktion deren Leistungsfähigkeit, führen, getriggert. Durch deren chemische Reaktion mit dem Glas können diese Nebenprodukte vorteilhafterweise "aufgefangen" (bspw. gebunden oder umgewandelt) und somit die Zellalterung verlangsamt und/oder verzögert werden.

Nebenprodukte, die im Betrieb einer Sekundärzelle häufig auftreten, sind beispielsweise Wasser und Flußsäure (HF), die insbesondere aus einem Lithiumsalz (oder gegebenenfalls auch mehreren verschiedenen Lithiumsalzen, falls vorhanden) des Elektrolyten gebildet werden. Letzteres ist insbesondere dann der Fall, wenn Spuren von Wasser im Elektrolyten vorhanden sind. Alternativ oder auch zusätzlich können Abbauprodukte des Elektrolyten auch mit einem Hexafluorophosphat (HF₆) reagieren und dabei Flußsäure freisetzen. Flußsäure kann dabei bekanntermaßen Glas angreifen und lösen.

Der Elektrolyt weist neben der mindesten einem organischen Lösemittel wenigstens ein Lithiumsalz (auch: "Lithium-Leitsalz") auf. Als ein solchen Lithiumsalz kommt beispielswiese wenigstens LiAsF6, LiClO4, LiSbF6, LiPtCl6, Li(CF3)SO3 (LiTf), LiC (SO2CF3)3, ein phosphatbasiertes Lithiumsalz - z. B. LiPF6, LiPF3(CF3)3 (LiFAP) und LiPF4(C2O4) (LiTFOB) - ein boratbasiertes Lithiumsalz - bspw. LiBF4, LiB(C2O4)2 (LiBOB), LiBF2(C2O4) (LiDFOB), LiB(C2O4)(C3O4) (LiMOB), Li(C2F5BF3) (LiFAB) und Li2B12Fi2 (LiDFB),L - und/oder ein Lithiumsalz von Sulfonylimiden - z. B. LiN(SO2CF3)2 (LiTFSI) und LiN (SO2C2F5)2 (LiBETI) - zum Einsatz. Ein besonders bevorzugtes Lithium-Leitsalz ist LiPF6 (Lithiumhexafluorphosphat). oder Mischungen von diesem. Als Lösungsmittel kommt bspw. ein Ethylencarbonat, Propylencarbonat, Diethylcarbonat, Dimethylcarbonat, Ethylmethylcarbonat, Acetonitril, Glutaronitril, Adiponitril, Pimelonitril, gamma-Butyrolacton, gamma-Valerolacton, Dimethoxyethan, 1,3-Dioxalan, Methylacetat und/oder Mischungen davon zum Einsatz.

Als Additive können bspw. ein Tris(2,2,2-Trifluoroethyl)Phosphit (TTFP), ein 1-Methyl-2-Pyrrolidinone, ein fluoriertes Carbamat und/oder ein Hexamethyl-Phosphoramid zum Einsatz kommen.

Bei dem Glas der Glashohlkugeln handelt es sich um ein Silikatglas, ein Alumosilikatglas, ein Phosphorsilikatglas, ein Phosphatglas, ein Boratglas und/oder um ein Borosilikatglas.

In einer vorteilhaften Ausführung ist die Wandung der Glashohlkugeln derart gestaltet, dass die Wandung durch die vorstehend beschriebene chemische Reaktion nicht vollständig aufgelöst wird, sondern nur teilweise. Dadurch kann der Inhalt der jeweiligen Glashohlkugel zu einem bestimmten Zeitpunkt austreten, die Kugelstruktur bleibt aber nach der Auflösung löslicher Bestandteile der Wandung zumindest zu Teilen erhalten. Diese "Reststruktur", bspw. in Form eines Gerippes, das die löslichen Bestandteile im Ausgangszustand durchzieht, kann dann vorteilhafterweise weiterhin eine gewisse räumliche Tragstruktur bilden und bspw. einen strukturellen Kollaps von die Glashohlkugeln aufweisenden Elementen der Sekundärzelle verhindern (letzteres insbesondere im Fall von vergleichsweise großen Glashohlkugeln). Hierzu ist bspw. die Ausführung der Glashohlkugeln aus Borosilikatglas zweckmäßig. In diesem Fall wird der silikatische Teil aufgrund der Reaktion mit dem Elektrolyten (oder den vorstehend beschriebenen Nebenprodukten) mit der Zeit aufgelöst, die durch Bor gebildeten Strukturen bleiben aber in Form des Gerippes "stehen". Optional kann eine solche teilweise Auflösung der Glashohlkugeln (und damit das Verbleiben der Reststruktur) auch durch die Kombination unterschiedlicher Gläser oder eines unterschiedlich dotierten Glases ermöglicht werden. Bspw. bewirken Dotierungen mit Bor oder Germanium unterschiedliche Löslichkeiten im Elektrolyten, so dass eine innere Kugel mit der einen Dotierung und einer diese umgebende äußere Kugel mit der anderen Dotierung vorgesehen sein kann.

In einer weiteren zweckmäßigen Ausführung ist eine Auflösungsdauer der Glashohlkugeln durch eine Wahl der Wandstärke der Wandung der Glashohlkugeln vorgegeben. Anders ausgedrückt wird die Dauer, bis sich die Wandung der Glashohlkugeln und somit insbesondere letztere selbst aufgelöst hat bzw. haben, mithin also der Zeitpunkt (oder der Zeitraum) der Freisetzung des Inhalts, durch eine geeignete Wahl der Wandstärke vorgegeben. Auch wird die Reaktivität der Gläser durch eine chemische Vorspannung beeinflusst, so dass in einer optionalen (zusätzlichen oder alternativen) Ausführung die Lösungsgeschwindigkeit durch eine entsprechende chemische Vorspannung vorgegeben wird. Zur chemischen Vorspannung wird ein lonenaustausch (kleine gegen große Ionen oder umgekehrt) im Glas mittels Salzbädern durchgeführt.

In einer optionalen Variante kommen dabei Glashohlkugeln mit unterschiedlicher Wandstärke und/oder unterschiedlicher Größe, d. h. insbesondere unterschiedlichem Durchmesser, zum Einsatz. Dadurch kann vorteilhafterweise die Freisetzung des Inhalts der Glashohlkugeln über einen vergleichsweise langen Zeitraum gestreckt werden. Dabei braucht erkanntermaßen nicht jede Glashohlkugel von den anderen abweichen, sondern es kann ein Mischung von Glashohlkugeln zu Einsatz kommen, die ein vorgegebenes Spektrum an unterschiedlichen Abmessungen abdeckt.

In einer zweckmäßigen Variante liegen die Wandstärken im Bereich zwischen 1 Nanometer und 30 Mikrometern, insbesondere zwischen 5 Nanometern und 5 Mikrometern. Durchmesser der Glashohlkugeln liegen vorzugsweise im Bereich zwischen 10 Nanometern und 1 Millimeter, insbesondere zwischen 50 Nanometern und 500 Mikrometern, bevorzugt zwischen 0,1 und 100 Mikrometern.

In einer bevorzugten Ausführung sind die Glashohlkugeln in einer Beschichtung des vorstehend beschriebenen Separators und/oder wenigstens eines inaktiven Bauelements der Sekundärzelle aufgenommen. Dabei kann vorteilhafterweise eine meist ohnehin erforderliche Beschichtung des Separators um einen zusätzlichen Nutzen - nämlich als Trägermaterial für die Glashohlkugeln - erweitert werden. Dies ist auch hinsichtlich einer wirtschaftlichen Fertigung vorteilhaft, da kein zusätzlicher Beschichtungsprozess erforderlich wird. Für den Fall, dass die Glashohlkugeln wie vorstehend beschrieben derart gestaltet sind, dass eine Reststruktur erhalten, also nicht chemisch gelöst wird, kann bei dieser Ausführung auch ein Dickenverlust der Separator-Beschichtung vermieden oder zumindest reduziert werden, so dass der Kontakt zwischen der jeweiligen Elektrode und dem Separator nicht verloren geht.

Insbesondere handelt es sich bei einem solchen inaktiven Bauelement um eine Wand des Zellgehäuses (bspw. also um das vorstehend genannte Blech oder die "Pouchfolie") und/oder um einen, insbesondere unbeschichteten, Abschnitt eines Stromableiters der Elektroden. Dies hat wiederum den Vorteil, dass eine unter Umständen auftretende Beeinflussung von Eigenschaften der aktiven Bauelemente (insbesondere der Elektroden bzw. des Separators) vermieden werden kann. Für den Fall, dass der oder jeder Stromableiter mit der die Glashohlkugeln enthaltenden Beschichtung versehen wird, ist zweckmäßigerweise ein Kontaktbereich des oder des jeweiligen Stromableiters für die nachfolgende galvanische Kontaktierung frei von der Beschichtung oder zumindest elektrisch leitfähig zu halten. Bspw. wird hierzu bei der Beschichtung eine Maske verwendet, die dazu führt, dass der entsprechende Kontaktbereich nicht beschichtet wird.

Grundsätzlich können die Glashohlkugeln auch in einer Beschichtung der Elektroden angeordnet sein. Allerdings ist hier das Risiko einer mechanischen Zerstörung der Glashohlkugeln während der Elektrodenfertigung, insbesondere während üblicherweise durchgeführter Kalandrier-Prozesse, vergleichsweise hoch.

Des Weiteren wäre es im Rahmen der Erfindung auch denkbar, die Glashohlkugeln beispielsweise in das Elektrodenmaterial oder andere Bauelemente selbst einzubetten. Hier besteht aber das Risiko, dass nach Auflösung der Glashohlkugeln verbleibende Leerstellen zur mechanischen Instabilität und/oder verminderten elektrischen Aktivität führen.

Ferner können die Glashohlkugeln auch - zusätzlich oder alternativ zu den vorstehend beschriebenen Ausführungen - in ohnehin vorhandenen Hohlräumen der Sekundärzelle angeordnet sein, sofern diese mit dem Elektrolyt in fluidischer Verbindung stehen. Bei solchen Hohlräumen handelt es sich bspw. um ohnehin vorhandene Poren der oder der jeweiligen Elektrode, die meist Porositäten im Bereich von 20 bis 30 Vol.-%. Solche Poren weisen dabei Größen (Durchmesser) im Bereich von insbesondere 0,1 bis 15 Mikrometern auf und liegen somit zumindest teilweise im Bereich der vorstehend genannten Durchmesser der Glashohlkugeln, so dass letztere - zumindest deren Anteil mit einem korrespondierenden Durchmesserbereich - auch in diese Poren eingebracht werden können.

Das erfindungsgemäße Kraftfahrzeug bildet insbesondere das vorstehend genannte Kraftfahrzeug und umfasst dabei den vorstehend beschriebenen Energiespeicher. Somit weist das Kraftfahrzeug in zweckmäßigen Ausführungen die gleichen, vorstehend beschriebenen Merkmale wie der Energiespeicher auf. Außerdem kommen dem Kraftfahrzeug auch die gleichen Vorteile wie dem Energiespeicher zu.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend werden Ausführungsbeispiele der Erfindung anhand einer Zeichnung näher erläutert. Darin zeigen:
- Fig. 1: in einer schematischen Darstellung ein elektromotorisch betriebenes Kraftfahrzeug mit einem Energiespeicher, und
- Fig. 2: in einer schematischen Teilschnittdarstellung eine Sekundärzelle des Energiespeichers des Kraftfahrzeugs.

Einander entsprechende Teile sind in allen Figuren stets mit gleichen Bezugszeichen versehen.

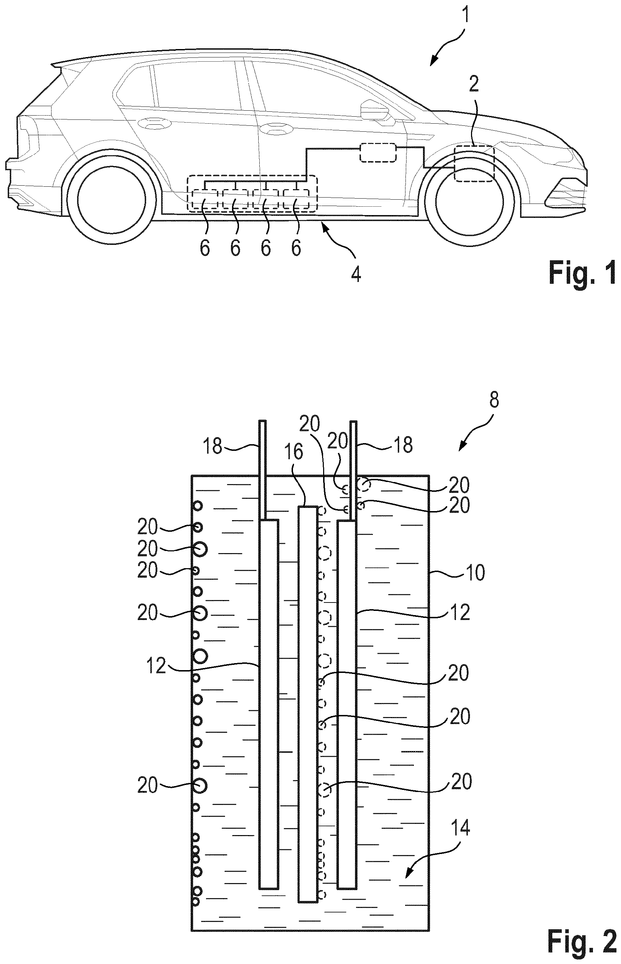

In Fig. 1 ist schematisch ein Kraftfahrzeug 1 dargestellt. Bei diesem Kraftfahrzeug 1 handelt es sich um ein landgestütztes, radgebundenes Fahrzeug, konkret um einen Personenkraftwagen. Das Kraftfahrzeug 1 ist elektromotorisch angetrieben und weist dazu einen Elektromotor 2 auf, sowie eine Traktionsbatterie 4. Die Traktionsbatterie 4 weist wiederum mehrere, hier konkret vier, Batteriemodule 6 auf, die wiederum eine Mehrzahl von Sekundärzellen 8 (s. Fig. 2) aufweisen. Die Traktionsbatterie 4 stellt somit den Energiespeicher des Kraftfahrzeugs 1 dar.

Jede Sekundärzelle 8 weist ein Zellgehäuse (kurz: Gehäuse 10) auf, in dem eine Anzahl von paarweisen Elektroden 12 innerhalb einer. auch kurz als "Elektrolyt" bezeichneten, Elektrolytlösung 14 angeordnet ist. Im vorliegenden Ausführungsbeispiel ist nur ein Paar von Elektroden 12 dargestellt. Die Sekundärzelle 8 weist außerdem einen Separator 16 auf, der zwischen den beiden Elektroden 12 angeordnet ist und diese räumlich voneinander trennt. An jeder Elektrode 12 ist außerdem eine Kontaktfahne 18 (auch als "Stromableiter" bezeichnet) angebunden, die mediendicht aus dem Gehäuse 10 herausgeführt ist.

Um eine Alterung der Sekundärzelle 8 durch Verbrauch von Lithium-Ionen hinauszuzögern, weist eine jede Sekundärzelle 8 ein Reservoir auf, das zur zeitlich verzögerten Freigabe von Elektrolyt dient. Das Reservoir ist durch eine Vielzahl von Glashohlkugeln 20 gebildet, die in ihrem Innenraum eine Menge der Elektrolytlösung 14 eingeschlossen haben. Die Glashohlkugeln 20 sind derart in der Sekundärzelle 8 angeordnet, dass die Glashohlkugeln 20 ständig mit der im Gehäuse 10 aufgenommenen, "freien" Elektrolytlösung 14 in Kontakt stehen. Dadurch wird das Glas der Glashohlkugeln 20 von der Elektrolytlösung 14 zersetzt, bis eine Wandung der Glashohlkugeln 20 (also deren gläserne Schale) zusammenbricht und damit den Inhalt freigibt.

Im dargestellten Ausführungsbeispiel sind die Glashohlkugeln 20 in eine nicht dargestellte Beschichtung der Innenseite des Gehäuses 10 eingebettet, allerdings derart, dass der Kontakt mit der Elektrolytlösung 14 gegeben ist.

In alternativen oder optional zusätzlichen Ausführungsbeispielen - in Fig. 2 mit Strichlinien dargestellt - sind die Glashohlkugeln 20 in eine entsprechende Beschichtung des Separators 16 und/oder der Kontaktfahnen 18 eingebettet (der Übersichtlichkeit halber nur für eine Seite des Separators 16 und eine Kontaktfahne 18 dargestellt).

Um den Zeitpunkt der Freigabe des Inhalts der Glashohlkugeln 20 und somit deren Auflösungsdauer vorgeben zu können, wird eine Wandstärke der Glashohlkugeln 20 entsprechend dick (großer Wert der Wandstärke) oder dünn gewählt. Um den Zeitraum der Freisetzung möglichst lang zu gestalten, werden Glashohlkugeln 20 mit unterschiedlichen Werten der Wandstärke eingesetzt. Zur Verdeutlichung sind die Glashohlkugeln 20 in Fig. 2 mit unterschiedlicher Größe dargestellt.

### Bezugszeichenliste

- 1: Kraftfahrzeug
- 2: Elektromotor
- 4: Traktionsbatterie
- 6: Batteriemodul
- 8: Sekundärzelle
- 10: Gehäuse
- 12: Elektrode
- 14: Elektrolytlösung
- 16: Separator
- 18: Kontaktfahne
- 20: Glashohlkugel

## Patentansprüche

1. Energiespeicher (4), insbesondere für ein Kraftfahrzeug (1), aufweisend,
eine Sekundärzelle (8) mit zwei komplementären Elektroden (12), einem diese beabstandenden Separator (16), einem Zellgehäuse (10), das die Elektroden (12) und den Separator (16) umhüllt, sowie einen Elektrolyten (14), mit dem das Zellgehäuse (10) befüllt ist, wobei innerhalb des Zellgehäuses (10) Glashohlkugeln (20) vorhanden sind, die mit einer Menge des Elektrolyten (14) und/oder eines Additivs befüllt sind, und die mit dem im Zellgehäuse (10) aufgenommenen Elektrolyten (14) in Kontakt stehen,
**dadurch gekennzeichnet, dass**
dass das Glas der Glashohlkugeln (20) derart gewählt ist, dass dieses durch eine chemische Reaktion mit dem Elektrolyten gelöst wird, wobei als Glas ein Silikatglas, ein Alumosilikatglas, ein Phosphorsilikatglas, ein Phosphatglas, ein Boratglas und/oder ein Borosilikatglas zum Einsatz kommt.

2. Energiespeicher (4) nach Anspruch 1,
wobei eine Wandung der Glashohlkugeln (20) ausschließlich durch ein Glas gebildet ist.

3. Energiespeicher (4) nach Anspruch 1 oder 2,
wobei die Wandung der Glashohlkugeln (20) derart gestaltet, dass die Wandung durch die chemische Reaktion nur teilweise gelöst wird und eine Reststruktur, die lösliche Bestandteile der Glashohlkugeln (20) im Ausgangszustand durchzieht, nach der Auflösung der löslichen Bestandteile erhalten bleibt.

4. Energiespeicher (4) nach einem der Ansprüche 1 bis 3,
wobei eine Auflösungsdauer der Glashohlkugeln (20) durch Wahl der Wandstärke der Wandung vorgegeben ist.

5. Energiespeicher (4) nach Anspruch 4,
wobei Glashohlkugeln (20) mit unterschiedlicher Wandstärke und/oder unterschiedlichem Durchmesser zum Einsatz kommen.

6. Energiespeicher (4) nach Anspruch 4 oder 5,
wobei die Glashohlkugeln (20) Wandstärken im Bereich 1 Nanometer bis 30 Mikrometer, insbesondere zwischen 5 Nanometer und 5 Mikrometer, aufweisen.

7. Energiespeicher (4) nach einem der Ansprüche 1 bis 6,
wobei die Glashohlkugeln (20) in einer Beschichtung des Separators (16) und/oder wenigstens eines inaktiven Bauelements (10) der Sekundärzelle (8) aufgenommen sind.

8. Energiespeicher (4) nach Anspruch 7,
wobei es sich bei dem inaktiven Bauelement um eine Wand des Zellgehäuses (10) und/oder um einen Abschnitt eines Stromableiters (18) der Elektroden (12) handelt.

9. Kraftfahrzeug (1) mit einem Energiespeicher (4) nach einem der Ansprüche 1 bis 8.

## Claims

1. Energy store (4), in particular for a motor vehicle (1), comprising,
a secondary cell (8) with two complementary electrodes (12), a separator (16) keeping them apart, a cell housing (10), which encloses the electrodes (12) and the separator (16), and also an electrolyte (14), with which the cell housing (10) is filled, wherein the cell housing (10) contains hollow glass spheres (20), which are filled with a quantity of the electrolyte (14) and/or an additive and which are in contact with the electrolyte (14) held in the cell housing (10),
**characterized in that**
the glass of the hollow glass spheres (20) is chosen such that it is dissolved by a chemical reaction with the electrolyte, wherein the glass used is a silicate glass, an aluminosilicate glass, a phosphorus silicate glass, a phosphate glass, a borate glass and/or a borosilicate glass.

2. Energy store (4) according to Claim 1,
wherein a wall of the hollow glass spheres (20) is formed exclusively by a glass.

3. Energy store (4) according to Claim 1 or 2,
wherein the wall of the hollow glass spheres (20) is designed such that the wall is only partially dissolved by the chemical reaction and a residual structure, which runs through soluble components of the hollow glass spheres (20) in the initial state, is retained after the soluble components have been dissolved.

4. Energy store (4) according to one of Claims 1 to 3, wherein a duration of dissolution of the hollow glass spheres (20) is predetermined by choosing the wall thickness of the wall.

5. Energy store (4) according to Claim 4,
wherein hollow glass spheres (20) with different wall thicknesses and/or different diameters are used.

6. Energy store (4) according to Claim 4 or 5,
wherein the hollow glass spheres (20) have wall thicknesses in the range of 1 nanometre to 30 micrometres, in particular between 5 nanometres and 5 micrometres.

7. Energy store (4) according to one of Claims 1 to 6, wherein the hollow glass spheres (20) are incorporated in a coating of the separator (16) and/or at least one inactive component (10) of the secondary cell (8).

8. Energy store (4) according to Claim 7,
wherein the inactive component is a wall of the cell housing (10) and/or a portion of a current collector (18) of the electrodes (12).

9. Motor vehicle (1) with an energy store (4) according to one of Claims 1 to 8.

## Revendications

1. Accumulateur d'énergie (4), destiné notamment à un véhicule automobile (1), ledit accumulateur d'énergie comprenant une cellule secondaire (8) pourvue de deux électrodes complémentaires (12), un séparateur (16) espaçant celle-ci, et un boîtier de cellule (10) qui entoure les électrodes (12) et le séparateur (16), ainsi qu'un électrolyte (14) dont le boîtier de cellule (10) est rempli, des billes de verre creuses (20) étant présentes à l'intérieur du boîtier de cellule (10), lesquelles sont remplies d'une quantité d'électrolyte (14) et/ou d'un additif, et sont en contact avec l'électrolyte (14) contenu dans le boîtier de cellule (10),
**caractérisé en ce que**
le verre des sphères de verre creuses (20) est choisi de telle sorte qu'il soit dissous par une réaction chimique avec l'électrolyte, le verre étant un verre silicaté, un verre aluminosilicaté, un verre phosphosilicaté, un verre phosphaté, un verre boraté et/ou un verre borosilicaté.

2. Accumulateur d'énergie (4) selon la revendication 1,
une paroi des sphères de verre creuses (20) étant formée exclusivement de verre.

3. Accumulateur d'énergie (4) selon la revendication 1 ou 2,
la paroi des sphères de verre creuses (20) étant conçue de manière à que la paroi ne soit dissoute que partiellement par la réaction chimique et une structure résiduelle qui imprègne les composants solubles des sphères de verre creuses (20) à l'état initial soit conservée après dissolution des composants solubles.

4. Accumulateur d'énergie (4) selon l'une des revendications 1 à 3,
la durée de dissolution des sphères de verre creuses (20) étant prédéterminée par le choix de l'épaisseur de la paroi.

5. Accumulateur d'énergie (4) selon la revendication 4,
des sphères de verre creuses (20) de différentes épaisseurs de paroi et/ou différents diamètres étant utilisées.

6. Accumulateur d'énergie (4) selon la revendication 4 ou 5,
les sphères de verre creuses (20) ayant des épaisseurs de paroi comprises entre 1 nanomètre et 30 micromètres, en particulier entre 5 nanomètres et 5 micromètres.

7. Accumulateur d'énergie (4) selon l'une des revendications 1 à 6,
les sphères de verre creuses (20) étant logées dans un revêtement du séparateur (16) et/ou d'au moins un composant inactif (10) de la cellule secondaire (8).

8. Accumulateur d'énergie (4) selon la revendication 7,
le composant inactif étant une paroi du boîtier de cellule (10) et/ou une portion d'un collecteur de courant (18) des électrodes (12).

9. Véhicule automobile (1) comprenant un accumulateur d'énergie (4) selon l'une des revendications 1 à 8.
